# EUROPEAN PATENT APPLICATION

(11) **EP 4 783 335 A1**
(43) Date of publication of application: **29.07.2026**
(21) Application number: 25221546.2
(22) Date of filing: 08.12.2025
(51) Int. Cl.: H01M 50/342, H01M 50/184

(54) **SECONDARY BATTERY INCLUDING VENT AND METHOD OF MANUFACTURING THE SECONDARY BATTERY**

(30) Priority: 24.01.2025 KR 20250011753
(71) Applicant: SAMSUNG SDI CO., LTD., Yongin-si, Gyeonggi-do 17084 (KR)
(72) Inventor: JEONG, Myungha, 17084 Yongin-si (KR); BAEK, Soomin, 17084 Yongin-si (KR)
(74) Representative: Marks & Clerk LLP

(57) **Abstract**

A secondary battery includes a case having an opening formed therein, an electrode assembly accommodated in the case, a cap plate fixed to the case, and a vent formed in at least one of the case and the cap plate. The vent includes a notch that includes a notch penetration portion extending through the at least one of the case and the cap plate and opening to an inside of the secondary battery and a notch blocking part that closes the notch penetration portion.

## Description

### BACKGROUND

### 1. Field

The present disclosure relates to a vent formed in an external material of a secondary battery, the secondary battery including the same, and a method of manufacturing the secondary battery.

### 2. Description of the Related Art

Secondary batteries are batteries that can be charged and discharged, unlike primary batteries that cannot be recharged. A secondary battery generally includes an electrode assembly that includes a positive electrode plate, a separator, and a negative electrode plate. A secondary battery also includes a cap assembly including a case (or a can) that accommodates the electrode assembly, and an external terminal for connecting the electrode assembly to an external power source or load.

A secondary battery further includes a vent for releasing gas generated inside the case. The vent is opened by rupturing a notch due to the pressure of gas generated by overcharging or abnormal operation of a battery. The gas is discharged through to the outside through the opened portion of the vent, thereby preventing explosion of the secondary battery. The vent can be provided on the cap assembly or the case. A conventional method of forming a vent forms a notch then bonds the vent to a gas discharge hole formed in a cap plate.

The information disclosed in this section is for enhancement of understanding of the background of the present disclosure. It may contain information that does not constitute related or prior art.

### SUMMARY OF THE DISCLOSURE

The present disclosure is directed to providing a secondary battery with reduced rupture pressure distribution gaps caused by varying rupture pressure distribution according to a product-specific vent when forming a vent, and a method of manufacturing the secondary battery.

According to one aspect of the present disclosure, there is provided a secondary battery including a case with an opening formed therein, an electrode assembly accommodated in the case, a cap plate fixed to the case to close the opening, and a vent formed in at least one of the case and the cap plate, wherein the vent includes a notch that includes a notch penetration portion that extends through the at least one of the case and the cap plate and opens to an inside of the secondary battery and a notch blocking part that closes the notch penetration portion.

The notch blocking part may be a welding bead formed in the notch penetration portion.

The notch blocking part may be formed along a center line extending in one direction and along a branch line extending from a first end and a second end of the center line, and the branch line may extend in a direction that forms a right angle or an angle in aan direction that the center line extends.

The at least one of the cap plate and the case in which the vent is formed may comprise an outer surface and an inner surface, and the notch blocking part may be positioned closer to the outer surface.

The notch penetration portion may be formed so that an area of a hole increases in a direction from the outer surface to the inner surface.

The notch penetration portion may comprise a first portion adjacent to the outer surface, and a second portion extending from the first portion and adjacent to the inner surface, and an area of the first portion of the notch penetration portion may be less than an area of the second portion of the notch penetration portion.

The notch may comprise a chamfer surface formed at a corner at which the inner surface meets an inner circumferential surface of the notch penetration portion.

The notch blocking part may comprise a blocking member that covers the notch penetration portion and welding portions that bond the blocking member to the at least one of the cap plate and the case.

The at least one of the cap plate and the case in which the vent is formed may comprise an outer surface and an inner surface, wherein the blocking member is provided on the outer surface, and wherein the welding portions are formed at ends of the blocking member.

The at least one of the cap plate and the case in which the vent is formed may comprise an outer surface and an inner surface, wherein the blocking member is provided on the outer surface, and the welding portions may extend through the blocking member and the outer surface.

The vent may further comprise a hinge, wherein the hinge comprises: a hinge penetration portion formed in the hinge in a thickness direction; and a hinge blocking part in the hinge penetration portion.

According to another aspect of the present disclosure, there is provided a method of manufacturing a secondary battery with a vent including a notch formed in at least one of a case that accommodates an electrode assembly and a cap plate fixed to an opening of the case, which includes perforating at least one of the case and the cap plate to form a notch penetration portion, and forming a notch blocking part that closes the notch penetration portion.

The notch blocking part may be formed by a welding bead.

The vent may further comprise a hinge comprising a hinge penetration portion formed in the hinge in a thickness direction and a hinge blocking part in the hinge penetration portion, wherein the hinge penetration portion is formed along with the notch penetration portion, wherein the hinge blocking part is formed along with the notch blocking part, and wherein the hinge blocking part has a greater thickness than the notch blocking part or has a higher rupture pressure than a rupture pressure of the notch blocking part.

The notch blocking part may comprise a blocking member that covers the notch penetration portion and a welding portion that bonds the blocking member to one of the cap plate and the case, and wherein the forming the hinge blocking member may comprise: providing the blocking member; aligning the blocking member on the at least one of the case and the cap plate in which the notch penetration portion is formed so that the blocking member covers an end of the notch penetration portion; and bonding the blocking member to the at least one of the case and the cap plate in which the notch penetration portion is formed using a welding process.

At least some of the above and other features of the invention are set out in the claims.

Aspects and features of the present disclosure are not limited to those described above, and other aspects and features not specifically mentioned herein will be clearly understood by those skilled in the art from the description of the present disclosure below.

### BRIEF DESCRIPTION OF THE DRAWINGS

The above and other objects, features and advantages of the present disclosure will become more apparent to those of ordinary skill in the art by describing example embodiments thereof in detail with reference to the accompanying drawings, in which:
FIG. 1 is a cross-sectional view of a cylindrical secondary battery according to embodiments of the present disclosure;
FIG. 2 is a top perspective view illustrating an exterior of a prismatic secondary battery according to embodiments of the present disclosure;
FIG. 3 is a cross-sectional view of the secondary battery along line I-I' in FIG. 2;
FIG. 4 is a view of a secondary battery including a vent according to an embodiment of the present disclosure;
FIG. 5 is a schematic view of the vent according to the embodiment of the present disclosure and is also a cross-sectional view of the secondary battery along line II-II' in FIG. 4;
FIG. 6 is a flowchart of a method of forming a notch of a vent according to an embodiment of the present disclosure;
FIGS. 7 to 9 are schematic views of shapes of the notch according to the embodiment of the present disclosure;
FIGS. 10 and 11 are schematic views of a vent according to another embodiment of the present disclosure and are also cross-sectional views of the secondary battery along line II-II' in FIG. 4;
FIG. 12 is a flowchart of a method of forming a notch of a vent according to another embodiment of the present disclosure;
FIG. 13 is a schematic view of a vent according to still another embodiment of the present disclosure and is also an enlarged view illustrating area AA in FIG. 4;
FIG. 14 is a cross-sectional view of the secondary battery along line III-III' in FIG. 13; and
FIG. 15 is a flowchart of a method of forming a notch and a hinge of a vent according to another embodiment of the present disclosure.

### DETAILED DESCRIPTION OF EXAMPLE EMBODIMENTS

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

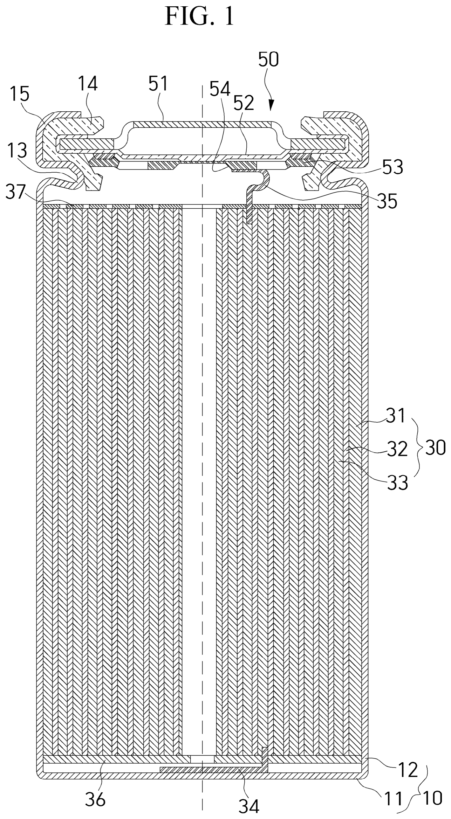

FIG. 1 is a cross-sectional view of a cylindrical secondary battery according to some embodiments of the present disclosure. The secondary battery may include an electrode assembly 30, a case 10 accommodating the electrode assembly 30 and an electrolyte therein, a cap assembly 50 coupled to an opening of the case 10 to seal the case 10, and an insulating plate 37 positioned between the electrode assembly 30 and the cap assembly 50 inside the case 10.

The electrode assembly 30 may include a first electrode 33 and a second electrode 31, with a separator 32 interposed between the electrodes 31, 33. The electrode assembly 30 may be wound in a jelly-roll shape.

The first electrode 33 includes a first substrate and a first active material layer on the first substrate. A first lead tab 35 may extend outwardly from a first uncoated portion of the first substrate where the first active material layer is not provided. The first lead tab 35 may be electrically connected to the cap assembly 50.

The second electrode 31 includes a second substrate and a second active material layer on the second substrate. A second lead tab 34 may extend outwardly from a second uncoated portion of the second substrate where the second active material layer is not provided. The second lead tab 34 may be electrically connected to the case 10. The first lead tab 35 and the second lead tab 34 may extend in opposite directions.

The first electrode 33 may act as a positive electrode. In such an embodiment, the first substrate may be made of, for example, an aluminum foil, and the first active material layer may include, for example, a transition metal oxide. The second electrode 31 may act as a negative electrode. In such an embodiment, the second substrate may be made of, for example, a copper foil or a nickel foil, and the second active material layer may include, for example, graphite.

The separator 32 prevents a short-circuit between the first electrode 33 and the second electrode 31 while allowing movement of lithium ions therebetween. The separator 32 may be made of, for example, a polyethylene film, a polypropylene film, a polyethylene-polypropylene film, or the like.

The case 10 accommodates the electrode assembly 30 and the electrolyte. Together with the cap assembly 50, the case 10 forms the external appearance of the battery. The case 10 may have a substantially cylindrical body portion 12 and a bottom portion 11 connected to one side of the body portion 12. A beading part 13 deformed inwardly may be formed in the body portion 12, and a crimping part 15 bent inwardly may be formed at an open end of the body portion 12.

The beading part 13 can reduce or prevent movement of the electrode assembly 30 inside the case 10 and can facilitate seating of a gasket 14 and the cap assembly 50. The crimping part 15 may firmly fix the cap assembly 50 by pressing the edge of the case 10 against the gasket 14. The case 10 may be formed, for example, of steel plated with nickel.

The cap assembly 50 may be fixed to the inside of the crimping part 15 by the gasket 14 to seal the case 10. The cap assembly 50 may include an upper cap 51, a safety vent 52, a lower cap 53, an insulating member, and a sub plate 54. But the present disclosure is not limited to such a configuration and may be modified in various ways.

The upper cap 51 may be positioned at the uppermost part of the cap assembly 50. The upper cap 51 may include a terminal part that protrudes upwardly and is connected to an external circuit. The upper cap 51 may also include an outlet for discharging gas arranged around the terminal part.

The safety vent 52 may be located under the upper cap 51. The safety vent 52 may include a protrusion part that protrudes convexly downwardly and is connected to the sub plate 54. At least one notch may be formed in the safety vent 52 around the protrusion part.

When gas is generated due to overcharging or abnormal operation of the secondary battery, the protrusion part is deformed upwardly by the gas pressure and separates from the sub plate 54 while the safety vent 52 is broken along the notch. The broken safety vent 52 may prevent the secondary battery from exploding by allowing for the gas to be discharged to outside of the secondary battery.

The lower cap 53 may be positioned below the safety vent 52. The lower cap 53 may have a first opening corresponding to the protrusion part of the safety vent 52 and a second opening for gas discharge. The insulating member may be positioned between the safety vent 52 and the lower cap 53 to insulate between the safety vent 52 and the lower cap 53.

The sub plate 54 may be under the lower cap 53. The sub plate 54 may be fixed to a lower surface of the lower cap 53 to block the first opening of the lower cap 53, and the protrusion part of the safety vent 52 may be fixed to the sub plate 54. A first lead tab 35, which extends from the electrode assembly 30, may be fixed to the sub plate 54. Accordingly, the upper cap 51, the safety vent 52, the lower cap 53, and the sub plate 54 may be electrically connected to the first electrode 33 of the electrode assembly 30.

The insulating plate 37 may be in contact with the electrode assembly 30 below the beading part 13. The insulating plate 37 may have a tab opening through which the first lead tab 35 extends. The cap assembly 50, which is electrically connected to the first electrode 33 by the first lead tab 35, may face the electrode assembly 30. The insulating plate 37 may be positioned between the cap assembly 30 and the electrode assembly 50 and may maintain an insulated state. Another insulating plate 36 may be included for insulation between the electrode assembly 30 and the bottom portion 11 of the case 10.

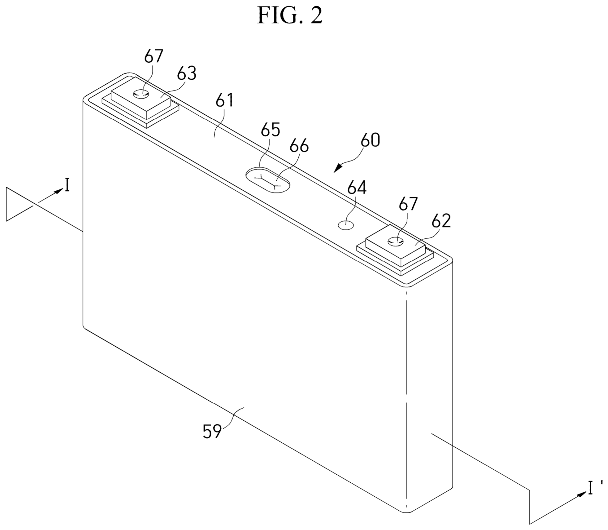

FIG. 2 is a top perspective view of an exterior of a prismatic secondary battery according to other embodiments of the present disclosure.

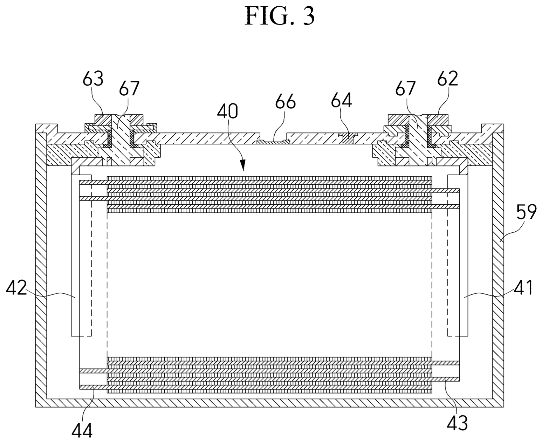

A case 59 defines an appearance of the prismatic secondary battery. The case 59 may be made of a conductive metal, such as aluminum, aluminum alloy, or nickel-plated steel. In addition, the case 59 may provide a space for accommodating an electrode assembly (e.g. 40, FIG. 3) therein.

A cap assembly 60 may include a cap plate 61 that covers the opening of the case 59. In some examples, the case 59 and the cap plate 61 may be made of a conductive material. Here, a first terminal 63 and a second terminal 62 may be electrically connected to respective positive and negative (or negative and positive) electrodes inside the case 59. The first and second terminals 62, 63 may protrude outward through the cap plate 61.

An electrolyte injection port 64 may be formed in the cap plate 61, a gas discharge hole 65 may be formed in the cap plate 61, and a gas discharge device 66 (e.g., vent) may be connected to the gas discharge hole 65. The gas discharge device 66 is opened by gas generated inside the battery and allows for gas to be discharged from the secondary battery.

FIG. 3 is a cross-sectional view taken along the line I-I' of FIG. 2, illustrating the internal configuration of the secondary battery and the structure of the cap assembly 60.

The electrode assembly 40 may be formed by winding or stacking a first electrode plate, a separator, and a second electrode plate, which are formed as thin plates or films. When the electrode assembly 40 is a wound stack, a winding axis may be parallel to the longitudinal direction of the case 59. In other embodiments, the electrode assembly 40 is a stack type rather than a winding type. But the shape of the electrode assembly 40 is not limited in the present disclosure. In addition, the electrode assembly 40 may be a Z-stack electrode assembly in which a positive electrode plate and a negative electrode plate are inserted to sides of a separator, which is then bent into a Z-stack. In addition, one or more electrode assemblies 40 may be stacked such that long sides of the electrode assemblies 40 are adjacent to each other and accommodated in the case 59. The number of electrode assemblies 40 in the case is not limited in the present disclosure. The first electrode plate of the electrode assembly 40 may act as a negative electrode, and the second electrode plate may act as a positive electrode. Of course, the reverse is also possible.

The first electrode plate may be formed by applying a first electrode active material, such as graphite or carbon, to a first electrode substrate formed of a metal foil, such as copper, a copper alloy, nickel or a nickel alloy. The first electrode plate may include a first electrode tab (or first uncoated portion) where the first electrode active material is not provided. The first electrode tab 43 may act as a current flow path between the first electrode plate and the first current collector 41. In some embodiments, when the first electrode plate is made, the first electrode tab 43 is formed by being cut to protrude to a first side of the electrode assembly 40. In other embodiments, the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode substrate formed of a metal foil, such as aluminum or an aluminum alloy. The second electrode plate may include a second electrode tab 44 (or a second uncoated portion) where the second electrode active material is not applied. The second electrode tab 44 may act as a current flow path between the second electrode plate and the second current collector 42. In some embodiments, the second electrode tab 44 may be formed by being cut to protrude to a second side (e.g., the opposite side) of the electrode assembly 40 when the second electrode plate is made. In other embodiments, the second electrode tab 44 may protrude to the other side of the electrode assembly 40 more than (e.g., farther than or beyond) the separator without being separately cut.

In FIG. 3, the first electrode tab 43 and the second electrode tab 44 are illustrated as being positioned at the upper portion of the electrode assembly 40. But in other embodiments, the first electrode tab 43 may be positioned at the right end of the electrode assembly 40 and the second electrode tab 44 may be positioned at the left end of the electrode assembly 40, or the electrode tabs 43 and 44 may be positioned at one end and extend in the same direction. Here, left, right, and upper are based on the illustrated secondary battery are for convenience, and their positions may change when the secondary battery rotates left and right or up and down.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 40 is accommodated in the case 59 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. In embodiments where the first electrode tab 43 and the second electrode tab 44 are positioned at ends of the electrode assembly 40, the first current collector 41 and the second current collector 42 are positioned across both ends and the upper portion of the electrode assembly 40.

The first current collector 41 and the second current collector 42 are connected to the first terminal 62 and the second terminal 63 through connection members 67. In some embodiments, the connection members 67 may each have an outer peripheral surface that is threaded and may be fastened to the first terminal 62 and the second terminal 63 by screwing. However, the present disclosure is not limited to such a configuration. For example, the connection members 67 may also be coupled to the first terminal 62 and the second terminal 63 by riveting or welding.

The secondary battery illustrated in FIG. 3 has a so-called top-tab structure in which the electrode assembly 40 is arranged so that the first electrode tab 43 and the second electrode tab 44 are positioned at the top of the secondary battery. In addition, since the first terminal 62 and the second terminal 63 are positioned at the top of the case 59, the secondary battery has a so-called top-terminal structure. That is, the first electrode tab 43 and the second electrode tab 44 of the electrode assembly 40 are positioned at the top inside the case 59, the first current collector 41 and the second current collector 42 are respectively connected thereto, and the first terminal 62 and the second terminal 63 connected to each of the first and second current collectors 41, 42 are positioned on the outside of the cap plate 61.

Hereinafter, a prismatic secondary battery will be described as an example. But the present disclosure is not limited thereto.

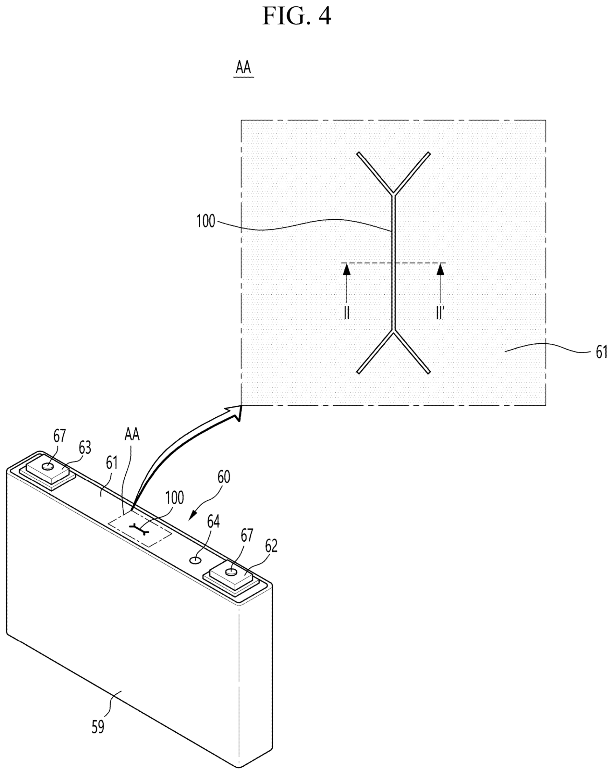

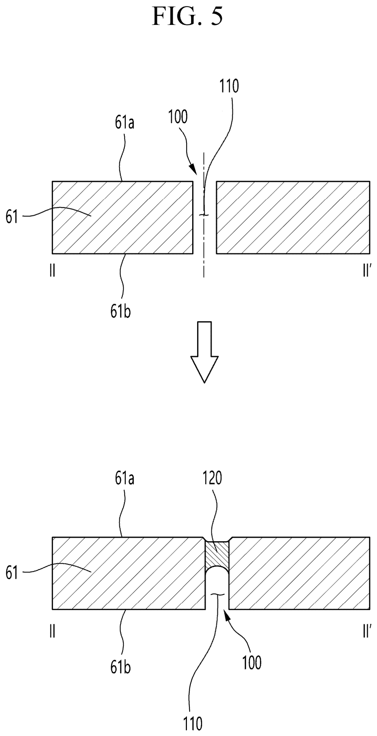

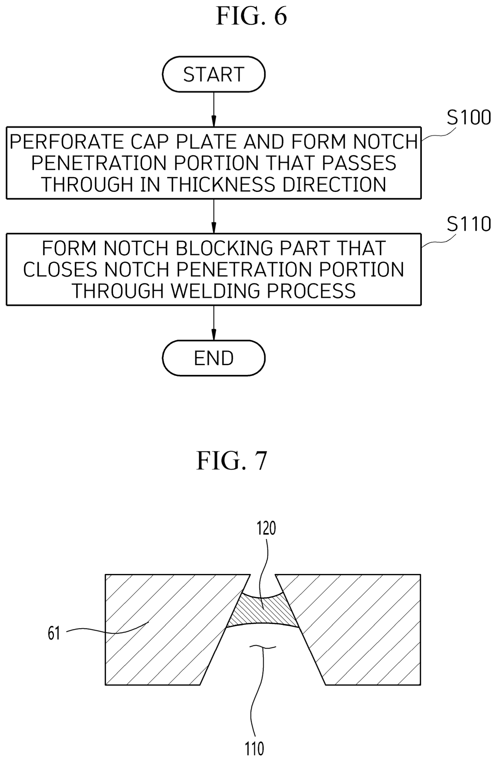

FIG. 4 is a view of a secondary battery including a vent according to an embodiment of the present disclosure. FIG. 5 is a schematic view of the vent according to the embodiment of the present disclosure and is also a cross-sectional view of the secondary battery along line II-II' in FIG. 4. FIG. 6 is a flowchart of a method of forming a notch of a vent according to an embodiment of the present disclosure.

Referring to FIGS. 4 and 5, a secondary battery according to the embodiment of the present disclosure includes a vent for discharging internal gas. The vent may be ruptured when an internal pressure of the secondary battery is a preset pressure or higher so that internal gas is discharged to outside of the secondary battery. In the drawings, an example in which the vent is formed in a cap plate 61 is illustrated as an example, but the present disclosure is not limited thereto. The vent is formed in at least one of the cap plate 61 and a case 59 (or all elements requiring the vent) and may be provided as a plurality of vents. For example, the vent may be formed in at least one of surfaces forming an exterior of the case 59. Hereinafter, an embodiment in which the vent is formed in the cap plate 61 will be described as an example.

The vent includes a notch 100. The notch 100 is a part through which gas is discharged and that is opened when the internal pressure of the second battery is the preset pressure or higher. The notch 100 includes a notch penetration portion 110 that may pass through the cap plate 61 in a thickness direction and opens to an inside of the secondary battery. The notch 100 also includes a notch blocking part 120 that blocks the notch penetration portion 110. The notch penetration portion 110 may be a hole that extends through the cap plate 61 in the thickness direction. The notch penetration portion 110 may stay closed due to the notch blocking part 120 when an internal pressure of the case 59 is lower than the preset pressure. The notch penetration portion 110 may be opened outward as the notch blocking part 120 is ruptured when the internal pressure of the case 59 is higher than the preset pressure. The notch blocking part 120 may fill at least a part of the notch penetration portion 110. A thickness of the notch blocking part 120 may be set with consideration to an internal pressure of the battery and a preset rupture pressure of the notch blocking part 120.

As illustrated in FIG. 5, the notch penetration portion 110 may be formed along a line. The line may include a center line extending in one direction. The line may also include at least one branch line extending from an end of the center line. The branch line may refer to a line extending in a direction that forms a right angle or a tilted angle e.g., acute or obtuse angle extending from the center line. For example, as illustrated, the line may include the center line extending in the one direction and four branch lines extending in straight or diagonal directions from ends of the center line. In plan view, the notch penetration portion 110 may be formed, for example, to have a straight shape, symmetrically connected Y shapes, symmetrically extending T shapes, a bidirectional arrow shape, a circular/elliptical shape of an open loop/closed loop type, or the like.

Referring further to FIG. 6, a process of forming the notch 100 of the vent may include a first process S100 of forming the notch penetration portion 110 by perforating the cap plate 61, and a second process S110 of forming the notch blocking part 120 that closes the notch penetration portion 110.

The first process S100 of forming the notch penetration portion 110 may include perforating the cap plate 61. The first process S100 may be performed using a cutting machine, a press, etc. The second process S110 of forming the notch blocking part 120 that closes the notch penetration portion 110 may include welding. The welding process may include laser welding, ultrasonic welding, resistance welding, and the like. But the present disclosure is not limited thereto, and laser welding may be preferably performed. The second process S110 may be welding along a preset line (or its periphery) and filling the notch penetration portion 110 with a welding bead. Here, the welding bead may formed by melting a part of the cap plate 61, using a laser beam for example, so as to completely fill at least a part of the notch penetration portion 110.

In the second process S110, the welding may be performed on at least one of one surface or outer surface 61a and the other surface or inner surface 61b of the cap plate 61. The welding process may be preferably performed on the outer surface 61a of the cap plate 61 or an outer surface of the case 59. Welding on the inner surface 61b of the cap plate 61 or an inner surface of the case 59 is less convenient. Also, since the welding bead is formed to protrude from the other surface 61b of the cap plate 61, care must be taken so as to not damage an internal structure such as the electrode assembly 40 during the welding. Accordingly, the welding process may be preferably performed on the outer surface 61a of the cap plate 61.

The notch blocking part 120 may fill the notch penetration portion 110 and may be located adjacent to the outer surface 61a of the cap plate 61 with respect to the center in a thickness direction. Preferably, the notch blocking part 120 may be formed to fill the notch penetration portion 110 and to protrude outward from the notch penetration portion 110, that is, inward from the outer surface 61a of the cap plate 61, that is, not protrude beyond the outer surface 61a. Thus, the notch blocking part 120 may not be exposed to outside of the cap plate 61. This may mean that a consistent exterior design may be provided for a predetermined exterior specification and is advantageous from an aesthetic point of view.

According to an embodiment of the present disclosure, since the notch 100 of the vent is formed directly in the cap plate 61, the conventional process of separately manufacturing a vent in which the notch 100 is formed and then bonding the vent to a gas discharge hole formed in the cap plate 61 can be omitted. Accordingly, a simplified and convenient process is possible.

In addition, since the notch of the vent is conventionally formed by forging using a press, etc., when the notch needs to be formed in a relatively thick plate, it is difficult to uniformly form the shapes of the notches for each product. Further, since stress is concentrated on a specific area during forging, there is a problem that an actual rupture pressure of the machined notch may not correspond to a preset design value, and since rupture pressure distribution of notches for each product varies, it is difficult to manage the rupture pressure design of the notch. In an embodiment of the present disclosure, since the notch blocking part 120 that closes the notch penetration portion 110 is formed through ae welding process after forming the notch penetration portion 110 that passes through the cap plate 61 without forging, the difficulty of thickness control according to forging and a product-specific rupture pressure distribution problems may be resolved.

FIGS. 7 to 9 are schematic views of notches according to embodiments of the present disclosure.

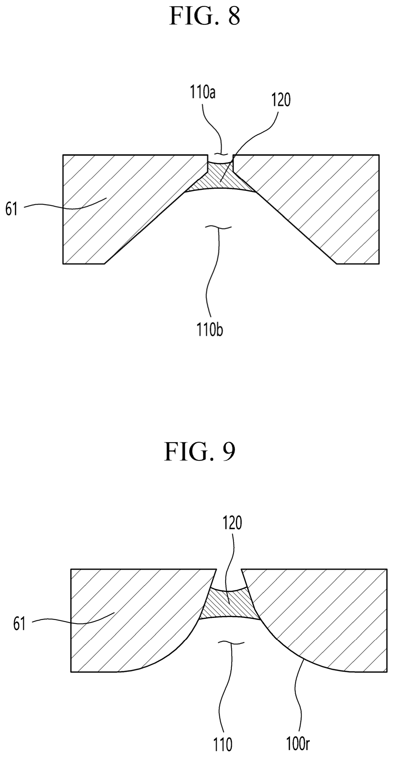

After a period of time, the internal high pressure of a secondary battery may cause a creep phenomenon where deformation is concentrated on the notch area due to swelling of the battery, and early venting wherein the vent may open at a lower rupture pressure than a set rupture pressure may occur. To minimize the creep and early venting phenomena by dispersing a deformation force concentrated on the notch area, the notch 100 may have shapes as illustrated in FIG. 7 and 8.

Referring to FIG. 7, the notch 100 of the vent may include the notch penetration portion 110 and the notch blocking part 120. The notch penetration portion 110 may be formed so that an area of the hole gradually increases from the outer surface 61a of the cap plate 61 to the inner surface 61b of the cap plate 61. The notch blocking part 120 may fill the notch penetration portion 110 and may be formed closer to the outer surface 61a of the cap plate 61.

Referring to FIG. 8, the notch 100 of the vent may include the notch penetration portion 110 and the notch blocking part 120. The notch penetration portion 110 may include a first portion 110a adjacent to the outer surface 61a of the cap plate 61, and a second portion 110b extending from the first portion 110a in the thickness direction and adjacent to the inner surface 61b of the cap plate 61. The outer surface 61a of the cap plate 61 may correspond to an outer surface of the secondary battery, and the inner surface 61b may correspond to an inner surface of the secondary battery. An area of a hole of the first portion 110a may be narrower than an area of a hole of the second portion 110b. The second portion 110b may be formed so that the area of the hole gradually increases from the first portion 110a to the inner surface 61b of the cap plate 61. The notch blocking part 120 may fill the notch penetration portion 110 and may be formed adjacent to the outer surface 61a of the cap plate 61. The notch blocking part 120 may be formed at the boundary between the first portion 110a and the second portion 110b. That is, one end of the notch blocking part 120 may be located in the first portion 110a, and the other end of the notch blocking part 120 may be located in the second portion 110b.

Referring to FIG. 9, the notch 100 of the vent may include the notch penetration portion 110 and the notch blocking part 120. The notch penetration portion 110 may include a chamfer surface 100r formed at a corner at which the inner surface 61b of the cap plate 61 meets an inner surface of the notch penetration portion 110. The chamfer surface 100r may be a curved surface or a flat surface, but the present is not limited thereto, and may be preferably a curved surface in terms of moldability.

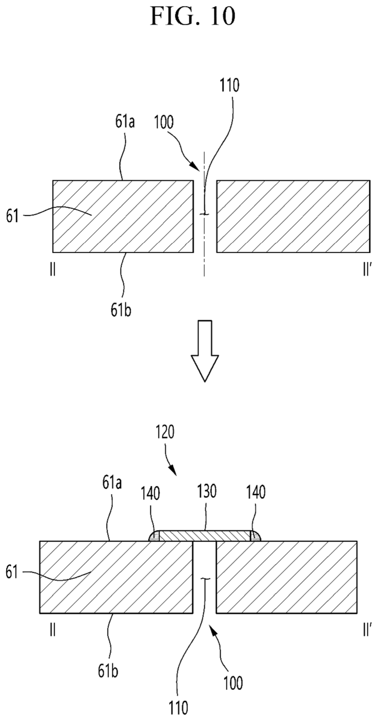

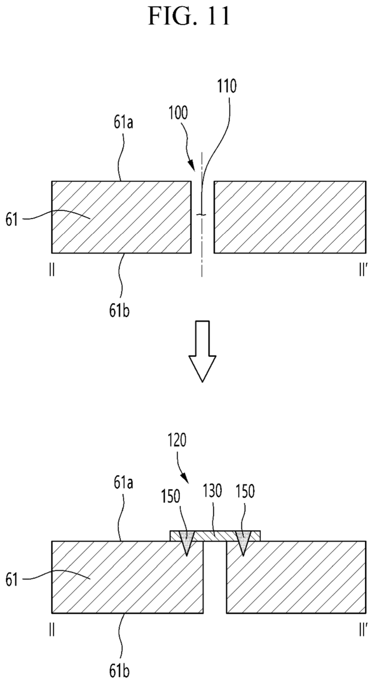

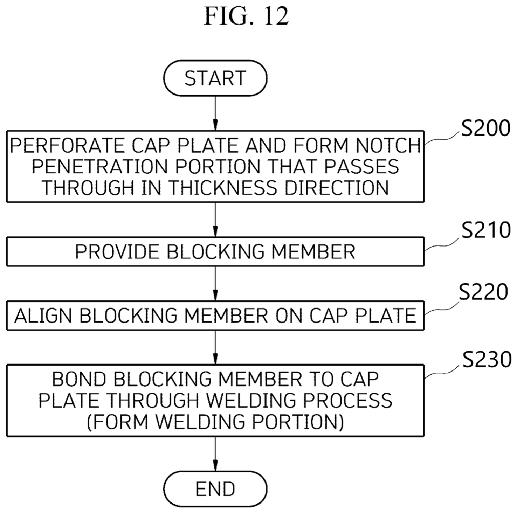

FIGS. 10 and 11 are schematic views of vents according to other embodiments of the present disclosure and are also cross-sectional views of the secondary battery along line II-II' in FIG. 4. FIG. 12 is a view flowchart of a method of forming a notch 100 of a vent according to an embodiment of the present disclosure. In describing the embodiments of FIGS. 10-12, features that are substantially the same as those of embodiments described above may be omitted.

Referring to FIG. 10, a secondary battery according to an embodiment of the present disclosure includes a vent for discharging internal gas. The vent may be ruptured when an internal pressure of the secondary battery is a preset pressure or higher so that internal gas is discharged to outside of the secondary battery. In the drawings, embodiments in which the vent is formed in the cap plate 61 are illustrated as examples, but the present disclosure is not limited to these examples. For example, the vent may be formed in at least one of the cap plate 61 and the case 59 and be provided as a plurality of vents.

The vent includes the notch 100. As described above, the notch 100 is configured to open when the internal pressure of the secondary battery is the preset pressure or higher so that gas may be discharged. The notch 100 includes the notch penetration portion 110 that may extend through the cap plate 61 in the thickness direction, and a notch blocking part 120 that blocks the notch penetration portion 110. The notch penetration portion 110 may be a hole passing through the cap plate 61 in the thickness direction. The notch penetration portion 110 may be closed by the notch blocking part 120 when the internal pressure of the case 59 is lower than the preset pressure and may be opened outward as the notch blocking part 120 is ruptured when the internal pressure of the case 59 becomes higher than the preset pressure.

The notch blocking part 120 may be formed on at least one of the outer surface 61a and the inner surface 61b of the cap plate 61. That is, the notch blocking part 120 may be formed on the outer surface 61a of the cap plate 61, one of the outer surface 61a and the inner surface 61b of the cap plate 61, or on both the outer surface 61a and the inner surface 61b of the cap plate 61. The notch blocking part 120 may be preferably formed on the outer surface 61a of the cap plate 61, which corresponds to the outer surface of the secondary battery. Hereinafter, embodiments in which the notch blocking part 120 is formed on the outer surface 61a of the cap plate 61 will be described as examples.

The notch blocking part 120 may include a blocking member 130 and welding portions 140 (Fig. 10) and 150 (Fig. 11) for fixing the blocking member 130 to the outer surface 61a of the cap plate 61. The blocking member 130 may be a plate shape, but the present disclosure is not limited thereto. The blocking member 130 may be formed of the same material as the cap plate 61, but the present disclosure is not limited thereto. When the vent is formed in the case 59, the blocking member 130 may be formed of the same material as the case 59, but the present disclosure is not limited thereto. The blocking member 130 may be formed of a different material from the cap plate 61, and the blocking member 130 may be formed of a material having a melting point that is substantially the same as or similar to that of the cap plate 61 to ensure weldability. For example, when the cap plate 61 facing the blocking member 130 includes a nickel layer, the blocking member 130 may be formed of steel having a melting point similar to that of nickel. The material of the blocking member 130 may be determined in consideration of a preset rupture pressure.

The blocking member 130 may be thinner than the cap plate 61. Both ends of the blocking member 130 may cover an end of the notch penetration portion 110 and extend to cover at least a part of the outer surface 61a of the cap plate 61. That is, both ends of the blocking member 130 may each face at least a part of the outer surface 61a of the cap plate 61.

As illustrated in the embodiment depicted in FIG. 10, the welding portions 140 may bond ends of the blocking member 130 and at least a part of the one surface 61a of the cap plate 61. Welding beads of the welding portions 140 may be formed at ends of the blocking member 130.

As illustrated in the embodiment depicted in FIG. 11, the welding portions 150 may mutually bond both ends of the blocking member 130 and at least a part of the outer surface 61a of the cap plate 61. The welding portions 150 may pass through the blocking member 130 and into the outer surface 61a of the cap plate 61 to bond the blocking member 130 to the cap plate 61. That is, the welding bead of the welding portions 150 may be formed to pass through the blocking member 130, the outer surface 61a of the cap plate 61, and a part of the cap plate in the thickness direction.

Referring further to FIG. 12, a process of forming the notch 100 of the vent may include a first process S200 of forming the notch penetration portion 110 by perforating the cap plate 61, and a second process S210, S220, and S230 of forming the notch blocking part 130 and 140 that closes the notch penetration portion 110.

The first process S100 may include directly perforating the cap plate 61 using a cutting machine, a press, etc. The second process S210, S220, and S230 may include a first operation S210 of providing the blocking member 130. The second process may also include a second operation S220 of aligning the blocking member 130 on the cap plate 61 so that the blocking member 130 covers one end of the notch penetration portion 110 and covers at least a part of the one surface 61a of the cap plate 61. And the second process may further include a third operation S230 of bonding the blocking member 130 to the cap plate 61 through a welding process. In the third operation S230, the welding portion 140 may be formed.

In the third operation S230, the welding process may be performed on both ends of the blocking member 130. In the third operation S230, as the blocking member 130 and the cap plate 61 are bonded, the welding bead may be formed on ends of the blocking member 130. Alternatively, in the third operation S230, the welding process may be performed so that the welding beads pass through the blocking member 130. That is, in the third operation S230, when the blocking member 130 and the cap plate 61 are bonded, the welding beads may passes through the blocking member 130, the outer surface 61a of the cap plate 61, and a part of the cap plate in the thickness direction.

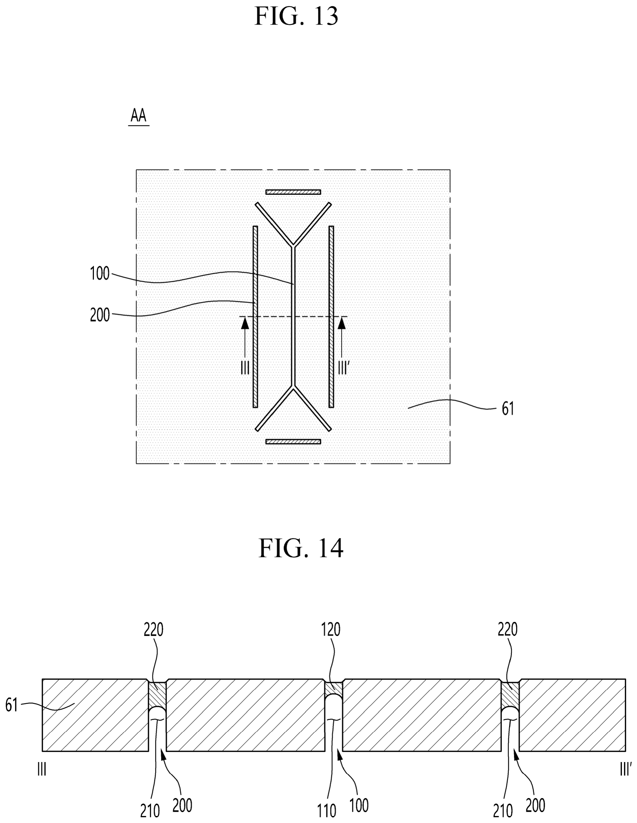

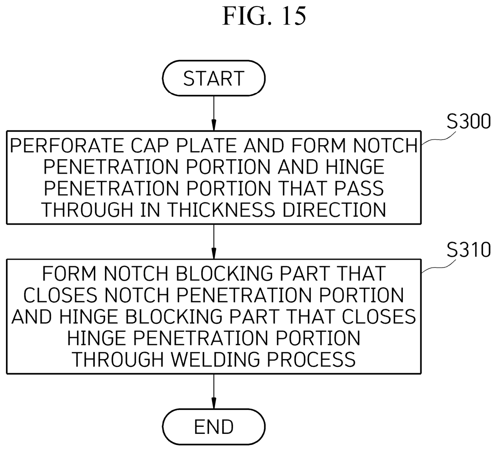

FIG. 13 is a schematic view of a vent according to another embodiment of the present disclosure and is also an enlarged view illustrating area AA in FIG. 4. FIG. 14 is a cross-sectional view of the secondary battery along line III-III' in FIG. 13. FIG. 15 is a flowchart of a method of forming a notch and a hinge of a vent according to another embodiment of the present disclosure.

Referring to FIGS. 13 and 14, a secondary battery according to an embodiment of the present disclosure includes a vent for discharging internal gas. The vent includes the notch 100 and may include a hinge 200. As described above, the notch 100 may open when the internal pressure of the case 59 is the preset pressure or higher such that gas is discharged from the secondary battery. The components of the notch 100 described in the above may be applied to the notch 100 of the vent.

The hinge 200 may be formed adjacent to the notch 100. The hinge 200 may be a part that is deformed (not ruptured) when the notch 100 is ruptured due to an internal gas pressure of the battery. The hinge 200 may restrain the vent from being separated from the cap plate 61 or the battery case 59. That is, the hinge 200 may be deformed to fold when the notch 100 is ruptured and may serve to secure a discharge port through which gas is discharged. When the vent is completely separated, the vent may block gas/heat discharge paths provided in a secondary battery module or pack or cause a short circuit with peripheral circuits, thereby causing an additional event. Thus, it is possible to prevent the vent from being separated by forming the hinge 200. The hinge 200 may be provided as a plurality of hinges, and a location of the hinge 200 may be determined in consideration of the location, shape, etc., of the notch 100.

The hinge 200 may include a hinge penetration portion 210 that extends through the cap plate 61 in the thickness direction, and a hinge blocking part 220 that blocks the hinge penetration portion 210. The hinge penetration portion 210 may be a hole which may completely pass through the cap plate 61 in the thickness direction. The hinge penetration portion 210 may be formed when forming the notch penetration portion 110. The hinge penetration portion 210 may stay closed due to the hinge blocking part 220 even when the notch blocking part 120 is ruptured because the internal pressure of the cap plate 61 is higher than the preset pressure. The hinge blocking part 220 may fill at least a part of the hinge penetration portion 210, and a thickness of the hinge blocking part 220 may be set in consideration of the preset rupture pressure of the notch blocking part 120. A rupture pressure of the hinge blocking part 220 may be higher than the rupture pressure of the notch blocking part 120. A thickness of the hinge blocking part 220 may be greater than a thickness of the notch blocking part 120.

Referring further to FIG. 15, a process of forming the notch 100 of the vent may include a first process S300 of forming the notch penetration portion 110 and the hinge penetration portion 210 by perforating the cap plate 61. The process may also include a second process S310 of forming the notch blocking part 120 that closes the notch penetration portion 110 and forming the hinge blocking part 220 that closes the hinge penetration portion 210.

The first process S300 may include direct perforation the cap plate 61 using a cutting machine, a press, etc. The second process S310 form the notch blocking part 120 that closes the notch penetration portion 110 and form the hinge blocking part 220 that closes the hinge penetration portion 210 through welding. The welding process may include laser welding, ultrasonic welding, resistance welding, etc. While laser welding may be preferably performed, the present disclosure is not limited thereto.

The second process S310 may be include welding along the preset line (or its periphery) to fill the notch penetration portion 110 with the welding bead to form the notch blocking part 120 and filling the hinge penetration portion 210 with the welding bead to form the hinge blocking part 220. Here, the welding bead may refer to a welding result formed by melting a part of the cap plate 61 by a welding means, for example, a laser beam, to form at least a part of the notch penetration portion 110 and at least a part of the hinge penetration portion 210.

In the second process, the welding may be such that the thickness of the welding bead (the hinge blocking part 220) formed in the hinge penetration portion 210 is greater than the thickness of the welding bead (the notch blocking part 120) formed in the notch penetration portion 110. Accordingly, even when the notch blocking part 120 is ruptured and the notch penetration portion 110 is opened, the hinge blocking part 220 may maintain the closed state of the hinge penetration portion 210.

According to the present disclosure, because a notch of a vent is formed directly in an external material of a secondary battery, it is possible to omit the conventional process of separately manufacturing a vent in which a notch is formed and then bonding the vent to a gas discharge hole formed in an external material in advance. Accordingly, a simplified process is provided that is more convenient and has an improved process yield.

According to the present disclosure, because a notch blocking part that closes a notch penetration portion is formed through a welding process after forming the notch penetration portion that passes through a plate of an external material of a secondary battery without forging, thickness control when forging and product-specific rupture pressure distribution problems are resolved.

Although the present disclosure has been described above with respect to embodiments thereof, the present disclosure is not limited thereto. Various modifications and variations can be made thereto by those skilled in the art within the scope of the present disclosure.

## Claims

1. A secondary battery comprising:
a case with an opening formed therein;
an electrode assembly accommodated in the case;
a cap plate fixed to the case to close the opening; and
a vent formed in at least one of the case and the cap plate,
wherein the vent comprises a notch that includes a notch penetration portion extending through the at least one of the case and the cap plate and opening to an inside of the secondary battery and a notch blocking part that closes the notch penetration portion.

2. The secondary battery as claimed in claim 1, wherein the notch blocking part is a welding bead formed in the notch penetration portion.

3. The secondary battery as claimed in claim 1 or 2, wherein the notch blocking part is formed along a center line extending in one direction and along a branch line extending from a first end and a second end of the center line, and
wherein the branch line extends in a direction that forms a right angle or an angle in a direction that the center line extends.

4. The secondary battery as claimed in claim 1, 2 or 3, wherein the at least one of the cap plate and the case in which the vent is formed comprises an outer surface and an inner surface, and
wherein the notch blocking part is positioned closer to the outer surface.

5. The secondary battery as claimed in claim 4, wherein the notch penetration portion is formed so that an area of a hole increases in a direction from the outer surface to the inner surface.

6. The secondary battery as claimed in claim 4 or 5, wherein the notch penetration portion comprises a first portion adjacent to the outer surface, and a second portion extending from the first portion and adjacent to the inner surface, and
wherein an area of the first portion of the notch penetration portion is less than an area of he second portion of the notch penetration portion.

7. The secondary battery as claimed in claim 4, 5 or 6, wherein the notch comprises a chamfer surface formed at a corner at which the inner surface meets an inner circumferential surface of the notch penetration portion.

8. The secondary battery as claimed in claim 1, wherein the notch blocking part comprises a blocking member that covers the notch penetration portion and welding portions that bond the blocking member to the at least one of the cap plate and the case.

9. The secondary battery as claimed in claim 8, wherein the at least one of the cap plate and the case in which the vent is formed comprises an outer surface and an inner surface,
wherein the blocking member is provided on the outer surface, and
wherein the welding portions are formed at ends of the blocking member.

10. The secondary battery as claimed in claim 8, wherein the at least one of the cap plate and the case in which the vent is formed comprises an outer surface and an inner surface,
wherein the blocking member is provided on the outer surface, and
wherein the welding portions extend through the blocking member and the outer surface.

11. The secondary battery as claimed in any one of claims 2 to 10, wherein the vent further comprises a hinge,
wherein the hinge comprises:
a hinge penetration portion formed in the cap plate in a thickness direction; and
a hinge blocking part in the hinge penetration portion.

12. A method of manufacturing a secondary battery with a vent comprising a notch formed in at least one of a case that accommodates an electrode assembly and a cap plate fixed to the case, the method comprising:
perforating the at least one of the case and the cap plate to form a notch penetration portion; and
forming a notch blocking part that closes the notch penetration portion.

13. The method as claimed in claim 12, wherein the notch blocking part is formed by a welding bead.

14. The method as claimed in claim 12 or 13, wherein the vent further comprises a hinge comprising a hinge penetration portion formed in the cap plate in a thickness direction and a hinge blocking part in the hinge penetration portion,
wherein the hinge penetration portion is formed along with the notch penetration portion,
wherein the hinge blocking part is formed along with the notch blocking part, and
wherein the hinge blocking part has a greater thickness than the notch blocking part or has a higher rupture pressure than a rupture pressure of the notch blocking part.

15. The method as claimed in claim 12, 13 or 14, wherein the notch blocking part comprises a blocking member that covers the notch penetration portion and a welding portion that bonds the blocking member to one of the cap plate and the case, and
wherein the forming the hinge blocking member comprises:
providing the blocking member;
aligning the blocking member on the at least one of the case and the cap plate in which the notch penetration portion is formed so that the blocking member covers an end of the notch penetration portion; and
bonding the blocking member to the at least one of the case and the cap plate in which the notch penetration portion is formed using a welding process.
